# FASCICULE DE BREVET EUROPEEN

(11) **EP 2 392 229 B1**
(45) Date de publication et mention de la délivrance du brevet: **21.11.2012**
(21) Numéro de dépôt: 11290242.4
(22) Date de dépôt: 26.05.2011
(51) Int. Cl.: A47B 91/06, B60B 33/00, B60R 16/06

(54) **Roulette pour pied de meuble**
Rolle für einen Möbelfuß
Caster for furniture foot

(30) Priorité: 04.06.2010 FR 1002365
(43) Date de publication de la demande: 07.12.2011
(73) Titulaire: TENTE ROULETTES POLYMERES-BRUANDET, 39700 La Barre (FR)
(72) Inventeur: Dayt, Patrick, 25000 Besancon (FR)
(74) Mandataire: Flavenot, Bernard

(56) Documents cités:
- EP-A1- 0 492 151
- DE-A1- 3 913 720
- DE-C1- 3 626 954
- DE-U1- 8 315 483
- US-A- 4 763 383
- US-B1- 6 786 559

## Description

La présente invention concerne les roulettes pour pieds de meubles, permettant de déplacer ces meubles sur le sol et de décharger, dans le sol, l'électricité statique qui aurait été emmagasinée par ces meubles.

Cette électricité statique est très gênante pour les utilisateurs de ces meubles et présente un inconvénient encore plus gênant lorsque ces meubles sont utilisés dans certains domaines comme les sciences, la recherche scientifique, la médecine, etc. car elle peut induire des erreurs dans les mesures, modifier certains paramètres, et même parfois endommager les instruments utilisés pour ces mesures, qui de façon connue sont généralement très onéreux.

On connaît déjà des roulettes pour pieds de meubles qui permettent de décharger l'électricité statique emmagasinée par ces meubles.

Il existe des réalisations de roulettes dites "anti électricité statique", comme celles qui sont décrites et illustrées dans les EP-A-0 492 151, DE-U-83 15 483 et US-A-4 763 383.

La roulette selon le premier document cité ci-dessus présente une structure complexe, notamment en sa partie pour relier le fil électriquement conducteur à l'embout plongeant dans le capot de la roulette.

La roulette selon le deuxième document cité ci-dessus comporte un fil conducteur qui frotte sur le sol, ce qui n'est pas très esthétique, ni surtout très fiable car il n'est pas certain que le fil frotte constamment sur le sol.

Quant à la roulette selon le troisième document, elle présente le même inconvénient que celle décrite dans le second document.

En outre, dans les roulettes selon ces deux derniers documents, la liaison électrique du fil conducteur avec le pivot et l'arbre de rotation de la roue (ou des roues) n'est pas certaine et/ou relativement difficile à réaliser à cause notamment de la forme du rivet, surtout lorsque le pivot est monté rotatif par rapport au capot de roue.

En définitive, outre le fait qu'elles ne soient pas très esthétiques, ces réalisations ne donnent pas toujours satisfaction car la tige ou la patte conductrice qui frotte sur le sol s'accroche facilement et/ou se casse ou s'use rapidement, ce qui ne lui permet pas d'assurer de façon fiable la décharge de l'électricité statique.

La présente invention a ainsi pour but de réaliser une roulette pour pied de meuble, qui pallie les inconvénients des roulettes de l'art antérieur comme celles définies dans les documents rappelés ci-dessus.

Plus précisément, la présente invention a pour objet une roulette pour pied de meuble, dont les caractéristiques structurelles sont énoncées dans la première revendication annexée.

D'autres caractéristiques et avantages de la présente invention apparaîtront au cours de la description suivante donnée en regard des dessins annexés à titre illustratif mais nullement limitatif, dans lesquels:
La figure 1 représente une vue de côté, partiellement en écorché, d'un premier mode de réalisation d'une roulette pour pied de meuble, essentiellement à une roue, selon l'invention, et
Les figures 2 à 4 représentent trois vues d'un second mode de réalisation d'une roulette pour pied de meuble, essentiellement à deux roues, selon l'invention, la figure 2 étant une vue de côté selon la coupe référencée II-II sur la figure 3, la figure 3 étant une vue de dessous et la figure 4 étant une demi-vue selon la coupe référencée IV-IV sur la figure 2.

En référence aux figures annexées, la présente invention est relative à une roulette pour pied de meuble, comportant au moins une roue 10, un arbre de rotation 12 définissant un axe de rotation 14, des moyens pour monter la roue 10 en coopération de contact avec l'arbre de rotation 12, un capot 20 apte à entourer au moins partiellement la roue 10, et des moyens pour monter l'arbre de rotation 12 en coopération avec le capot 20 de façon que la roue 10 soit apte à tourner par rapport au capot 20 autour de l'axe de rotation 14.

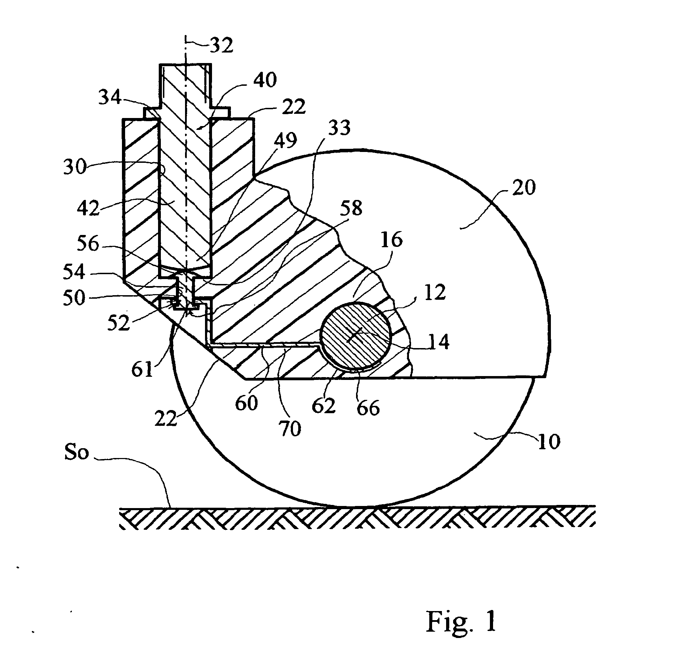

La figure 1 représente une roulette qui ne comporte qu'une roue partiellement recouverte par le capot. Avec ce premier type de roulette, il est possible que la roue 10 soit solidaire de l'arbre 12 que cet arbre soit monté rotatif sur les deux parois latérales du capot 20 par l'intermédiaire de deux paliers. Mais l'inverse est également possible, c'est-à-dire : l'arbre 12 fixe par rapport au capot et la roue montée pivotante par rapport à l'arbre 12 au moyen par exemple d'un roulement à billes ou analogue.

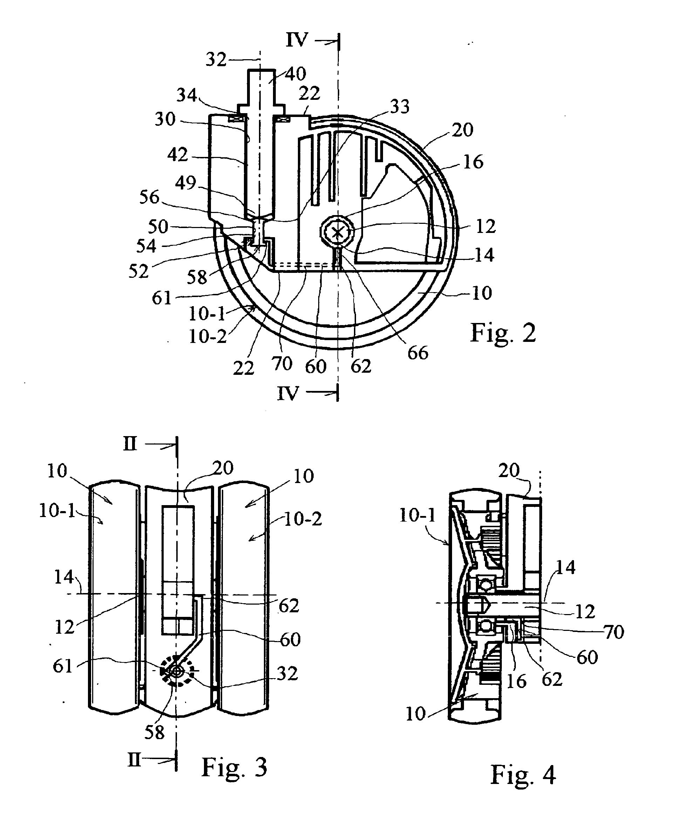

Les figures 2 à 4 représentent un autre mode de réalisation d'une roulette qui comporte deux roues avec un capot 20 qui n'entoure que très partiellement les deux roues, et qui surtout occupe l'espace inter-roues. Dans le cas illustré, l'arbre de rotation 12 est fixe par rapport au capot 20 et les deux roues sont montées rotatives par rapport à cet arbre au moyen par exemple de roulement à billes, comme il apparaît sur la figure 4.

Dans ces deux modes de réalisation, la roulette comporte des moyens pour monter la roue 10 en coopération de contact avec l'arbre de rotation 12, soit par contact direct de la roue avec l'arbre de rotation, soit de façon indirecte via des roulements à billes qui sont généralement en un matériau électriquement conducteur, par exemple métallique, comme de l'acier ou analogue.

La roulette comporte en outre un orifice borgne 30 de forme sensiblement cylindrique de révolution réalisé dans le capot suivant un axe d'orifice 32 sensiblement perpendiculaire à l'axe de rotation 14, cet orifice borgne débouchant sur la surface extérieure 22 du capot 20 par un orifice d'introduction 34, et un pivot 40 comportant au moins un embout d'enfichage 42 dont la section transversale est sensiblement complémentaire de celle de l'orifice borgne 30, de façon que cet embout d'enfichage 42 soit positionné dans cet orifice borgne 30 en étant introduit par l'orifice d'introduction 34 pour ensuite être apte à y pivoter autour de l'axe d'orifice 32.

La roulette comporte aussi une percée traversante 50 réalisée dans le capot 20 sensiblement selon une direction parallèle à l'axe d'orifice 32, de préférence de façon confondue, cette percée traversante débouchant dans le fond 33 de l'orifice borgne 30 et sur la surface extérieure 22 du capot.

Il est alors prévu un élément désigné de façon générique sous le terme "rivet 52" comportant une tige de rivet 54 d'une section transversale sensiblement complémentaire de celle de la percée traversante 50 et une tête de rivet 56 solidaire d'une première extrémité de la tige de rivet 54 en formant avec elle un épaulement.

Le rivet 52 est positionné dans la percée traversante 50 de façon que la tête de rivet 56 s'appuie sur le fond 33 de l'orifice borgne 30 via l'épaulement et que la seconde extrémité 58 de la tige de rivet opposée à la première émerge d'une quantité non nulle de cette percée traversante, dans le but défini ci-après.

La roulette comporte en outre un fil électriquement conducteur 60 comportant deux extrémités 61, 62, des moyens pour solidariser une première extrémité 61 du fil conducteur 60 avec la seconde extrémité 58 de la tige de rivet 54, et des moyens pour monter la seconde extrémité 62 du fil conducteur en coopération électrique avec l'arbre de rotation 12.

De plus, le pivot 40, l'arbre de rotation 12 et la roue 10 sont en des matériaux électriquement conducteurs, tandis que le capot 20 est en un matériau électriquement non-conducteur.

En outre, la longueur de l'embout d'enfichage 42 est déterminée de façon que son extrémité 49 située dans l'orifice borgne 30 soit au contact de la tête de rivet 56, figures 1 et 2.

De préférence, la tête de rivet 56 est de forme convexe pour assurer un bon contact, qui peut être assimilé à un contact ponctuel, entre elle et l'extrémité 49 de l'embout 42.

Selon une réalisation préférentielle présentant des avantages qui seront explicités ci-après, les moyens pour solidariser la première extrémité 61 du fil conducteur 60 avec la seconde extrémité 58 de la tige de rivet 54 sont constitués par un sertissage de la seconde extrémité de la tige de rivet 54 avec la première extrémité 61 du fil conducteur 60.

De façon également avantageuse, les moyens pour monter la seconde extrémité 62 du fil conducteur en coopération électrique avec l'arbre de rotation 12 sont constitués par le fait que cette seconde extrémité 62 du fil conducteur est, soit montée au contact de l'arbre de rotation 12 par friction quand cet arbre est animé d'un mouvement de rotation et que les roues sont fixées sur l'arbre, soit, ce qui le cas le plus général, maintenue serrée au contact de l'arbre quand il est fixe et que les roues sont montées en rotation par rapport à cet arbre, figures 1, 2 et 4.

En outre, quand l'arbre de rotation 12 est monté dans au moins un palier 16, figure 1 et 2, la seconde extrémité 62 du fil conducteur électrique 60 est logée dans une gorge 66 réalisée dans ce palier 16, cette gorge 66 ayant une profondeur au plus égale à l'épaisseur de la seconde extrémité 62 du fil conducteur électrique 60 de façon que ce fil conducteur soit au contact de l'arbre 12.

Pour une facilité de réalisation et donc une réduction du coût de fabrication de la roulette, cette gorge 66 est réalisée dans un plan perpendiculaire à l'axe de rotation 14, figure 1, ou dans un plan parallèle à cet axe de rotation 14, figure 4.

De façon préférentielle, pour ne pas nuire au caractère esthétique de la roulette, le fil conducteur électrique 60 est au moins partiellement inséré dans une rainure 70 réalisée dans le capot 20, de préférence au maximum des possibilités de cette insertion.

Selon une réalisation avantageuse, le pivot 40 et l'arbre de rotation 12 sont réalisés en un matériau métallique, par exemple de l'acier ou analogue, et la au moins une roue 10 est réalisée en une matière plastique dopée avec des particules (ou fibres) d'un matériau électriquement conducteur. La matière plastique est par exemple un thermoplastique élastomère comme le polyuréthane, un polyamide ou analogue et le matériau électriquement conducteur constituant les particules (ou fibres) de dopage est au moins l'un des matériaux suivants : aluminium, graphite, ou analogues.

La roulette décrite ci-dessus, qu'elle comporte une seule roue 10 comme dans le premier mode de réalisation illustré sur la figure 1, ou deux roues 10-1, 10-2 comme dans le second mode de réalisation illustré sur les figures 2 à 4, est destinée à être montée sur le pied d'un meuble de tout type susceptible d'emmagasiner de l'électricité statique et qui peut être amené à être déplacé sur un sol So.

En effet, la roulette selon l'invention comporte un ensemble d'éléments électriquement conducteurs et montés en série, à savoir : le pivot 40 qui est relié au meuble, le rivet 52 dont la tête 56 est au contact de l'extrémité 49 du pivot 40, le fil électriquement conducteur 60 dont une extrémité 61 est solidaire du rivet 52 et son autre seconde extrémité 62 est au contact de l'arbre de rotation 12, l'arbre de rotation 12 et la roue 10 (ou les roues 10-1, 10-2).

De ce fait, l'électricité statique emmagasinée par le meuble est conduite à la masse du sol So en cheminant le long de l'ensemble des éléments électriquement conducteurs définis ci-dessus.

A la présente description, on constate que la roulette anti électricité statique selon l'invention présente des avantages par rapport aux roulettes similaires de l'art antérieur décrites au préambule de la présente description.

Sa structure lui confère une plus grande facilité de réalisation du fait notamment de l'utilisation d'un rivet qui peut très facilement être serti avec l'extrémité 61 du fil conducteur 60, et même de façon automatisée, ce qui réduit le coût de fabrication de la roulette.

De plus, la roulette présente indéniablement un caractère esthétique par rapport aux roulettes de l'art antérieur, notamment celles mentionnées au préambule, car elle ne comporte pas de patte ou analogue disgracieuse frottant sur le sol.

En outre, le capot 20 peut être en un matériau plastique non dopé, ce qui présente deux avantages importants, celui de lui conserver une couleur naturelle généralement claire, et même blanche qui est la couleur de règle dans beaucoup de domaines d'utilisation de meubles munis de ce type de roulette, notamment scientifique et médical, et celui de ne pas contribuer à alourdir le prix de revient de la roulette, puisque le capot n'est pas en matière plastique dopée, le prix des matériaux dopants comme ceux mentionnés ci-avant étant généralement très élevé.

## Revendications

1. Roulette pour pied de meuble, comportant :
• au moins une roue (10),
• un arbre de rotation (12) définissant un axe de rotation (14), ledit arbre de rotation (12) étant monté dans au moins un palier (16),
• des moyens pour monter ladite roue (10) en coopération de contact avec ledit arbre de rotation (12),
• un capot (20) apte à entourer au moins partiellement ladite roue (10),
• des moyens pour monter ledit arbre de rotation (12) en coopération avec ledit capot (20) de façon que ladite roue (10) soit apte à tourner par rapport au dit capot (20) autour du dit axe de rotation (14),
• un orifice borgne (30) de forme sensiblement cylindrique de révolution réalisé dans ledit capot suivant un axe d'orifice (32) sensiblement perpendiculaire au dit axe de rotation (14), ledit orifice borgne débouchant sur la surface extérieure (22) du capot (20) par un orifice d'introduction (34),
et
• un pivot (40) comportant au moins un embout d'enfichage (42) dont la section transversale est sensiblement complémentaire de celle du dit orifice borgne (30), de façon que cet embout d'enfichage (42) soit positionné dans cet orifice borgne (30) pour être apte à y pivoter,
• une percée traversante (50) réalisée dans le capot (20) sensiblement selon une direction parallèle au dit axe d'orifice (32), ladite percée traversante débouchant dans le fond du dit orifice borgne (30) et sur la surface extérieure (22) du dit capot,
• un rivet (52) comportant une tige de rivet (54) d'une section transversale sensiblement complémentaire de celle de ladite percée traversante (50) et une tête de rivet (56) de forme convexe solidaire d'une première extrémité de ladite tige de rivet (54) pour former avec elle un épaulement, ledit rivet (52) étant positionné dans ladite percée traversante (50) de façon que ladite tête de rivet (56) s'appuie sur le fond (33) du dit orifice borgne (30) et que la seconde extrémité (58) de la tige de rivet opposée à la première émerge de cette percée traversante (50),
• un fil électriquement conducteur (60) comportant deux extrémités (61, 62), la première extrémité (61) du fil conducteur (60) étant sertie sur la seconde extrémité (58) de la tige de rivet (54) et la seconde extrémité (62) du fil conducteur (60) étant montée au contact par friction sur ledit arbre de rotation (12), cette dite seconde extrémité (62) du fil conducteur électrique (60) étant en outre logée dans une gorge (66) réalisée dans ledit palier (16) et ayant une profondeur au plus égale à l'épaisseur de ladite seconde extrémité (62) du dit fil conducteur électrique (60),
• ledit pivot (40), ledit arbre de rotation (12) et ladite roue (10) étant réalisés en des matériaux électriquement conducteurs, ledit capot (20) étant réalisé en un matériau électriquement non-conducteur, et la longueur du dit embout d'enfichage (42) étant déterminée de façon que son extrémité (49) située dans ledit orifice borgne (30) soit au contact de ladite tête de rivet (56).

2. Roulette selon la revendication 1, **caractérisée par le fait que** ladite gorge (66) est réalisée dans l'un des deux plans suivants : plan perpendiculaire au dit axe de rotation (14), plan parallèle au dit axe de rotation (14).

3. Roulette selon l'une des revendications précédentes, **caractérisée par le fait que** ledit fil conducteur électrique (60) est au moins partiellement enfiché dans une rainure (70) réalisée dans ledit capot (20).

4. Roulette selon l'une des revendications précédentes, **caractérisée par le fait que** ledit pivot (40) et ledit arbre de rotation (12) sont réalisés en un matériau métallique, et que la au moins une roue (10) est réalisée en une matière plastique dopée avec des particules d'un matériau électriquement conducteur.

5. Roulette selon la revendication 4, **caractérisée par le fait que** ladite matière plastique est l'un des produits suivants : un thermoplastique élastomère, un polyamide, et que le matériau électriquement conducteur constituant lesdites particules est au moins l'un des matériaux suivants : aluminium, graphite.

## Claims

1. A castor for a furniture leg, the castor comprising:
· at least one wheel (10);
· a rotary shaft (12) defining an axis of rotation (14), said rotary shaft (12) being mounted in at least one bearing (16);
· means for mounting said wheel (10) in contacting co-operation with said rotary shaft (12);
· a cover (20) suitable for surrounding said wheel (10) at least in part;
· means for mounting said rotary shaft (12) in co-operation with said cover (20) in such a manner that said wheel (10) is suitable for turning relative to said cover (20) about said axis of rotation (14);
· a blind orifice (30) of substantially circularly cylindrical shape formed in said cover along an orifice axis (32)' substantially perpendicular to said axis of rotation (14), said blind orifice leading to the outside surface (22) of the cover (20) via an insertion orifice (34); and
· a pivot (40) including at least one plug insert (42) of cross-section that is substantially complementary to the cross-section of said blind orifice (30) so that said plug insert (42) is positioned in said blind orifice (30) in order to be suitable for pivoting therein;
· a through hole (50) made in the cover (20) substantially in a direction parallel to said orifice axis (32), said through hole leading into the bottom of said blind orifice (30) and to the outside surface (22) of said cover;
· a rivet (52) comprising a rivet shank (54) of cross-section substantially complementary to the cross-section of said through hole (50) and a rivet head (56) of convex shape secured to a first end of said rivet shank (54) to co-operate therewith to form a shoulder, said rivet (52) being positioned in said through hole (50) in such a manner that said rivet head (56) bears against the bottom (33) of said blind orifice (30) and the second end (58) of the rivet shank remote from the first end emerges from said through hole (50);
· an electrically-conductive wire (60) having two ends (61, 62), the first end (61) of the conductive wire (60) being crimped to the second end (58) of the rivet shank (54), and the second end (62) of the conductive wire (60) being mounted with friction contact against said rotary shaft (12), said second end (62) of the electrically-conductive wire (60) also being received in a groove (66) formed in said bearing (16) and having depth no greater than the thickness of said second end (62) of said electrically-conductive wire (60);
· said pivot (40), said rotary shaft (12), and said wheel (10) being made of electrically-conductive materials, said cover (20) being made of a material that is not electrically-conductive, and the length of said plug insert (42) being determined so that its end (49) situated in said blind orifice (30) is in contact with said rivet head (56).

2. A castor according to claim 1, **characterized by** the fact that said groove (66) is made in one of the following two planes: a plane perpendicular to said axis of rotation (14); a plane parallel to said axis of rotation (14).

3. A castor according to either preceding claim, **characterized by** the fact that said electrically-conductive wire (60) is engaged at least in part in a slot (70) formed in said cover (20).

4. A castor according to any preceding claim, **characterized by** the facts that said pivot (40) and said rotary shaft (12) are made of metal, and that at least one wheel (10) is made of a plastics material doped with particles of an electrically-conductive material.

5. A castor according to claim 4, **characterized by** the facts that said plastics material is one of the following materials: a thermoplastic elastomer; a polyamide; and that the electrically-conductive material constituting said particles is at least one of the following materials: aluminum; graphite.

## Patentansprüche

1. Möbelfußrolle, die umfasst:
- wenigstens ein Rad (10),
- eine Drehwelle (12), die eine Drehachse (14) definiert, wobei die Drehwelle (12) in wenigstens einem Lager (16) montiert ist,
- Mittel zum Anbringen des Rades (10) in Kontakteingriff mit der Drehwelle (12),
- eine Haube (20), die das Rad (10) wenigstens teilweise umgeben kann,
- Mittel, um die Drehwelle (12) in Eingriff mit der Haube (20) in der Weise anzubringen, dass sich das Rad (10) in Bezug auf die Haube (20) um die Drehachse (14) drehen kann,
- eine Blindöffnung (30) mit im Wesentlichen zylindrischer, rotationssymmetrischer Form, die in der Haube längs einer Öffnungsachse (32) im Wesentlichen senkrecht zu der Drehachse (14) verwirklicht ist, wobei die Blindöffnung in die äußere Oberfläche (22) der Haube (20) durch eine Einführungsöffnung (34) mündet, und
- einen Schwenkzapfen (40), der wenigstens einen Einsteckansatz (42) aufweist, dessen Querschnitt zu jenem der Blindöffnung (30) im Wesentlichen komplementär ist, so dass dieser Einsteckansatz (42) in dieser Blindöffnung (30) positioniert ist, um darin schwenken zu können,
- ein Durchgangsloch (50), das in der Haube (20) in einer zu der Öffnungsachse (32) im Wesentlichen parallelen Richtung verwirklicht ist, wobei das Durchgangsloch in den Boden des Blindlochs (30) und in die äußere Oberfläche (22) der Haube mündet,
- einen Niet (52), der einen Nietstift (54) mit einem Querschnitt, der zu jenem des Durchgangslochs (50) im Wesentlichen komplementär ist, und einen Nietkopf (56) mit konvexer Form, der mit einem ersten Ende des Nietstifts (54) fest verbunden ist, um damit eine Schulter zu bilden, umfasst, wobei der Niet (52) in dem Durchgangsloch (50) in der Weise positioniert ist, dass sich der Nietkopf (56) auf dem Boden (33) der Blindöffnung (30) abstützt und dass das zweite Ende (58) des Nietstifts gegenüber dem ersten Ende von diesem Durchgangsloch (50) vorsteht,
- ein elektrisch leitender Draht (60), der zwei Enden (61, 62) besitzt, wobei das erste Ende (61) des Leiterdrahts (60) auf das zweite Ende (58) des Nietstifts (54) gequetscht ist und das zweite Ende (62) des Leiterdrahts (60) in reibschlüssigem Kontakt an der Drehwelle (12) angebracht ist, wobei dieses zweite Ende (62) des elektrischen Leiterdrahts (60) außerdem in einer Kehle (66) angeordnet ist, die in dem Lager (16) verwirklicht ist und eine Tiefe besitzt, die höchstens gleich der Dicke des zweiten Endes (62) des elektrischen Leiterdrahts (60) ist,
- wobei der Drehzapfen (40), die Drehwelle (12) und das Rad (10) aus elektrisch leitenden Materialien verwirklicht sind, die Haube (20) aus einem elektrisch nicht leitenden Material verwirklicht ist und die Länge des Einsteckansatzes (42) in der Weise bestimmt ist, dass sein Ende (49), das sich in der Blindöffnung (30) befindet, mit dem Nietkopf (56) in Kontakt ist.

2. Rolle nach Anspruch 1, **dadurch gekennzeichnet, dass** die Kehle (66) in einer der zwei folgenden Ebenen verwirklicht ist: Ebene senkrecht zu der Drehachse (14), Ebene parallel zu der Drehachse (14).

3. Rolle nach einem der vorhergehenden Ansprüche, **dadurch gekennzeichnet, dass** der elektrisch leitende Draht (60) wenigstens teilweise in eine Rinne (70) eingesteckt ist, die in der Haube (20) verwirklicht ist.

4. Rolle nach einem der vorhergehenden Ansprüche, **dadurch gekennzeichnet, dass** der Schwenkzapfen (40) und die Drehwelle (12) aus einem Metallmaterial verwirklicht sind und dass das wenigstens eine Rad (10) aus einem Kunststoff verwirklicht ist, der mit Partikeln eines elektrisch leitenden Materials dotiert ist.

5. Rolle nach Anspruch 4, **dadurch gekennzeichnet, dass** der Kunststoff eines der folgenden Produkte ist: ein elastomerer Thermoplast oder ein Polyamid; und dass das elektrisch leitende Material, das die Partikel bildet, wenigstens eines der folgenden Materialien ist: Aluminium oder Graphit.
